# EUROPEAN PATENT APPLICATION

(11) **EP 2 114 094 A1**
(43) Date of publication of application: **04.11.2009**
(21) Application number: 08008289.4
(22) Date of filing: 30.04.2008
(51) Int. Cl.: H04W 4/00

(54) **Signalling in a communication network**

(71) Applicant: Nokia Siemens Networks Oy, 02610 Espoo (FI)
(72) Inventor: Grusdt, Hans-Heinrich, 83607 Holzkirchen (DE); Kuhn, Gerhardt, 80687 München (DE); Scotto Di Carlo, Vicenzo, 81739 München (DE)

(57) **Abstract**

A base station is provided comprising a connection oriented device 500 and a packet oriented device 501 and an administrating device 508. The administrating device comprises a network interface 513, the connection oriented device comprises a first channel 505 and the packet oriented device comprises a second channel 507.

The first channel 505 and the second channel 507 are established on a radio interfaces. The administrating device 508 is adapted to communicate with a network via the network interface 513.

The communication with the network is based on an identifier. The administrating device 508 is adapted to administrate a connection service, which connection service is established via the first channel 505. The administration is conducted in accordance with the communication with the network.

The administrating device 508 further is adapted to administrate a packet service via the second channel 507 in accordance with the communication received via the network interface 513.

The connection service and the packet service are separate services.

## Description

### Technical field of the invention

The present invention relates to the technical field of communication networks. In particular the present invention relates to a base station, to a method for operating a base station, to a program element for operating a base station, to a gateway, to a method for operating a gateway, to a program element for operating a gateway, to a network apparatus, to a method for operating a network apparatus and to a program element for operating a network apparatus.

### Background of the invention

Considering the characteristics of the radio propagation in buildings, the quality, which is usually offered by a macrocell in an outdoor environment, in many cases cannot be reached in an indoor environment. The attenuation of radio signals, which attenuation may be caused by a wall of a building, may reduce signal strength of the radio signal. The attenuation of the radio signal may be responsible that inside a house or a building, a reception of the radio signal may not be possible.

Therefore, base stations of radio communication networks, which usually supply the outdoor area as macro-cells, may be located inside the relevant building. Such a base station, which is located inside a building may commonly be called a Femto Access Point (FAP), a Femto Customer Premise Equipment (FCPE) or a Femto cell CPE. The FCPE may be placed inside the residential building.

In order to connect the FCPE with a supplying network the appropriate network protocols of the network may have to be supported by the CPE. This dependency on the technology which is employed in the core of the serving network may lead to complicate and expensive CPE equipment.

From the technical specification 3GPP TS 25.413, V7.8.0 (2007-12), release 7, from the 3GPP (3^{rd} Generation Partnership Project) technical specification group radio access network, an UTRAN (UMTS Terrestrial Radio Access Network, Universal Mobile Telecommunications System) Iu interface RANAP (Radio Access Network Application Part) signalling is known.

The technical specification 3GPP TS 36.410, V8.0.0 (2007-12), release 8, from the 3GPP technical specification group radio access network, describes general aspects and principals for the S1 interface in an E-UTRAN network (Evolved Universal Terrestrial Access Network).

The technical specification 3GPP TS 36.413, V8.1.0 (2008-03), release 8, of the technical specification group radio access network, describes the S1 application protocol (S1AP or S1-AP) of the Evolved Universal Terrestrial Access Network (E-UTRAN).

### Summary of the invention

It may be seen as an object of the present invention to provide a less complex base station.

Thus, a base station, a method for operating a base station, a program element for operating a base station, a gateway, a method for operating a gateway, a program element for operating a gateway, a network apparatus, a method for operating a network apparatus and a program element for operating a network apparatus are provided.

According to an aspect of the present invention, a base station comprises a connection oriented device, a packet oriented device and an administrating device. The administrating device further comprises a network interface, the connection oriented device comprises a first channel and the packet oriented device comprises a second channel.

The first channel and the second channel may be established via a radio interface.

The administrating device is adapted to communicate with a network via the network interface. The communication with the network is based on an identifier. The administrating device is adapted to administrate a connection service, a circuit switched service or a connection switched service, which service the base station receives from the network. The connection service can be established via the first channel in accordance with the communication with the network.

The administrating device is further adapted to administrate a packet service or a packet switched service via the second channel in accordance with the communication with the network.

The connection service via the first channel and the packet service via the second channel are separated services which may be differentiated by different channel-numbers. In other words, the circuit switched service and the packet service may be distinguished within the base station.

The first channel may be a first interface or a first sub-interface of a radio interface. The second channel may be a second interface or a second sub-interface of the radio interface. The first channel and the second channel may be seen as logical channels or logical interfaces. The first channel and the second channel may be established via a common interface, e.g. a physical interface.

The packet oriented device may handle packet oriented services and the connection oriented device may handle connection oriented services or connection switched services.

A connection oriented service may be a voice service, wherein by setting up a connection a defined path through a network may be established. In contrary to a connection oriented service or a circuit switched service, a packet oriented service or a packet switched service may send packets comprising address information to the network and each network element within the network decides about the route, which the packet uses, in order to travel through the network. Therefore, packets belonging to a packet oriented service may use different routes through the network.

According to another aspect of the present invention, a method for operating a base station is provided. The method comprises communicating with a network based on an identifier. Thus, a decision about the destination of a message may be made on the basis of an ID or identifier or message type.

The method further comprises administrating a connection service, which connection service is established via a first channel of the base station, in accordance with the communication with the network. By communicating with the network, the base station may receive commands which instruct the base station how to handle a certain service or connection. Communicating or receiving may mean to exchange information on a bidirectional basis, i.e. sending as well as receiving.

The method further comprises administrating a packet service, which is established via a second channel of the base station, in accordance with the communication with the network.

The connection service via the first channel and the packet service via the second channel are separated services.

Since the connection service and the packet service are separated, the connection service and the packet service may be handled differently within the network.

The connection oriented service and the packet oriented service may be separated by using different channel-numbers or sub-channels of a radio interface (physical or logical channels), different frequencies on a radio interface or different time slots or different codes on the radio interface. Thus, within a mobile terminal, a mobile unit, a mobile user equipment (UE) or an end user device, the services may be separable. Therefore, the connection oriented service and the packet oriented service may also be handled differently within the UE, within the base station or within the network.

A single radio interface may comprise a first channel or a second channel.

A connection oriented service may be a service transporting time critical information like voice.

A packet oriented service may be a pure data service like Internet traffic or IP (Internet Protocol) traffic.

A connection oriented service may establish a connection or may establish a path through the network, which path the connection oriented service uses. In contrary, a packet oriented service may divide information into packets or packages and each package may have a destination address. Every network element or network node within a network then may decide on each packet which route the packet has to take through the network. In other words, in a connection oriented service or in a circuit switched service may all information elements or packets take the same path through the network wherein in a packet oriented service different packets may take different paths through the network.

According to a further aspect of the present invention, a program element for operating a base station is provided. The program element comprises a program code, which program code, when being executed by a processor is adapted to carry out the inventive method for operating a base station.

According to another aspect of the present invention, a computer-readable medium is provided, wherein the computer-readable medium comprises a program code, which program code, when being executed by a processor is adapted to carry out the inventive method for operating a base station.

A computer-readable medium may be a CD-ROM (Compact Disk Read Only Medium), a DVD (Digital Versatile Disk), a RAM (Random Access Memory) or an EPROM (Erasable Programmable Read Only Memory).

According to another aspect of the present invention, a gateway is provided, which gateway comprises a concentrating device. The concentration device further comprises a base station interface, a connection oriented gateway interface, and a packet oriented gateway interface.

The base station interface is adapted to communicate with a base station. In other words, the concentrating device may be adapted to communicate with a base station via the base station interface.

The communication with the base station is based on an identifier. The concentrating device is adapted to communicate administrative information for a connection oriented service via the base station interface, which connection oriented service is established on the connection oriented gateway interface. The administrative information is in accordance with the connection service, in particular in accordance with administrative information received for the connection oriented service.

The concentrating device is further adapted to communicate administrative information for a packet service via the base station interface in accordance with the packet service. The packet service is established on the packet oriented gateway interface of the gateway.

The connection service on the connection oriented gateway interface and the packet service on the packet oriented gateway interface are separated services.

Thus, the gateway may concentrate the different traffic received or communicated via the connection oriented gateway interface and the packet oriented gateway interface to a traffic using the single base station interface. The gateway may have for each base station connected to the gateway an individual single base station interface. The different traffic may be marked by the gateway with an identifier, in order to distinguish the traffic in the destination. Again, the term receiving may not exclude a bidirectional communication.

According to another aspect of the present invention, a method for operating a gateway is provided. The method comprises communicating administrative information associated with a connection service on a connection oriented gateway interface via the base station interface in accordance with the connection service. The method further comprises communicating administrative information associated with a packet service on a packet oriented gateway interface via the base station interface in accordance with the packet service.

Communicating with a base station via the base station interface is based on an identifier.

According to another aspect of the present invention, a program element for operating a gateway is provided, the program element comprising program code, which program code when being executed by a processor is adapted to carry out the method of operating a gateway.

According to another aspect of the present invention, the computer-readable medium is provided, wherein the computer-readable medium comprises program code, which program code, when being executed by a processor, is adapted to carry out the method for operating a gateway.

According to yet another aspect of the present invention, a network apparatus is provided.

The network apparatus comprises an adapting device. The adapting device comprises a base station interface and a core interface.

The adapting device is adapted to communicate with a base station via the base station interface of the network apparatus.

The communication with the base station is based on an identifier.

In particular the communication between the network apparatus and the base station may be based on a message type of a signalling message. The message type may identify whether the signalling message is for an UE or a base station. The corresponding UE may be identified by a first identifier. A further identifier may be used to differentiate between packet switched traffic and circuit switched traffic. In a case, where a 3G PS UE and an LTE UE are connected to a base station an identifier for circuit switched traffic may not be necessary.

The adapting device is adapted to exchange administrative information for a packet service with a core network via the core interface. The adapting device may further be adapted to extract an administrative information for the packet service from a message received from a core network.

Furthermore, the adapting device is adapted to communicate the administrative information for the packet service via the base station interface in accordance with the packet service. The administrative information associated with the packet service may be marked by an identifier and the administrative information may be communicated within one single link or within one single connection to the base station. Such an identifier may allow the base station to distinguish between different UEs and between circuit switched traffic and packet traffic. The identifier may in addition allow distinguishing between different types of packet switched traffic. Thus, for example packet switched traffic destined for a 3G PS UE and packet switched traffic destined for an LTE UE may be distinguished or separated.

According to another aspect of the present invention, a method for operating a network apparatus is provided, wherein the method comprises, exchanging administrative information for a packet service with a core network. The administrative information associated with the packet service is communicated via the base station interface in accordance with the packet service. Communicating with the base station via the base station interface is based on an identifier.

The administrative information for the packet service may be extracted from administrative information, which information the network apparatus receives from the core network.

According to another aspect of the present invention, a program element for operating a network apparatus is provided, the program element comprising a program code, which program code, when being executed by a processor is adapted to carry out the method for operating a network apparatus.

According to yet another aspect of the present invention, a computer readable medium is provided, wherein the computer readable medium comprises a program code, which program code, when being executed by a processor is adapted to carry out the method of operating a network apparatus.

In other words, a base station may comprise a connection oriented device, a packet oriented device and an administrating device. The administrating device may further comprise a network interface, the connection oriented device comprises a first interface and the packet oriented device comprises a second interface.

The first interface and the second interface may be radio interfaces.

The administrating device may be adapted to communicate with a network via the network interface. The communication with the network may be based on an identifier. The administrating device may be adapted to administrate a connection service, a circuit switched service or a connection switched service, which service the base station receives from the network. The connection service may be established via the first interface in accordance with the communication with the network.

The administrating device may further be adapted to administrate a packet service or a packet switched service via the second interface in accordance with the communication with the network.

The connection service via the first interface and the packet service via the second interface may be separated services which may be differentiated by different channels.

A CPE, Femto Access Point, or Femto Customer Premise Equipment may be based on the 3G (3^{rd} Generation) standard or the UMTS standard. The 3G standard or UMTS standard may allow a 3G UE or a 3G mobile terminal, like a mobile phone, a laptop or a PDA (Personal Digital Assistant) connecting with a mobile network based on the UMTS standard. The UMTS standard may separate circuit switched traffic and packet switched traffic.

A 3G Femto cell CPE may be a DSL-CPE comprising a radio interface, which radio interface may be based on the 3G standard or which radio interface may be a Uu interface. The 3G Femto cell CPE in the direction to a network may use an open interface, for example an Iu over IP (Internet Protocol) interface. Other CPE may support proprietary interfaces over IP and/or over DSL.

The Femto CPE may provide access for 3G handsets or 3G mobile phones. A 3G mobile phone may differentiate between a circuit and a packet switched traffic. In other words, a mobile phone based on the 3G standard may provide circuit switched traffic or circuit oriented services and a packet oriented service or a packet switched traffic.

The circuit switched (CS) traffic and the packet switched (PS) traffic may origin from the mobile terminal or the user equipment. However, from an administrative perspective, within the network the circuit switched traffic and the packet switched traffic may be handled separately and differently. In particular on the air interface, or the radio interface, which may be based on the Uu standard, the circuit switched traffic and the packet switched traffic may be handled separately. For example, a separation between circuit switched traffic and packet switched traffic may be made by use of different channels, interfaces, frequencies, different time slots or different codes for a connection switched traffic and for packet switched traffic. Thus, for a different type of service different traffic parameters, like QoS (Quality of Service) parameters may be allocated.

Circuit switched traffic may be characterized by a traffic for which a connection has to be established even in a case where no information is sent on this connection.

Packet switched traffic may be traffic, which arrives irregularly and thus, such traffic may be handled on an irregular basis. However, no resources may have to be allocated in the case when no traffic is transmitted.

Whereas, for a connection oriented service the path through the network is predefined, a packet oriented service may decide about a path or a route through the network dependently on the actual situation of the network.

The Femto CPE may provide access for 3G handsets for the core network of a mobile network operator. A Femto CPE may also have to provide access for a network architecture where only packet switched traffic is supported. Thus, real time traffic or data traffic may be differentiated.

The Femto CPE may only provide an Iu-PS interface or may only provide an Iu-CS interface. Thus, a first Femto CPE may exist, which handles packet switched traffic. And a second Femto CPE may be provided, which handles circuit switched traffic. The first Femto CPE may be a separate device and the second Femto CPE may be a separate device.

The first Femto CPE may connect to a MME, i.e. to a MME*, wherein the MME may comprises an SGSN. The MME may be adapted for providing a RANAP message via an S1 interface or via an SLAP protocol.

The MME* may be adapted to provide an identifier for a connection with the first Femto CPE. The FGW may convert S1 to RANAP for connecting to the MSC-S.

Real time traffic, for example voice traffic, which usually may be transported on a circuit switched connection may be transported on a packet switched basis. Such a network may be the Long-Term Evolution (LTE) network. In an LTE network a Femto CPE may provide access to the LTE network and a connection to the core network may be provided according to the System Architecture Evolution (SAE). The LTE access may be deployed in a step-wise approach. Thus, the Femto CPE may have to support two different interfaces and protocol stacks. For example, the Femto CPE may have to support an interface for 3G CS/PS and another interface for LTE/SAE.

The LTE (Long Term Evolution) standard may combine voice service and data services on a common packet switched platform, e.g. IP. LTE may allow an,LTE UE or an LTE mobile terminal, like a mobile phone, a laptop or a PDA connecting with a mobile network based on the LTE standard.

The interface for 3G may be based on the Iu interface and the interface for LTE/SAE may be an S1-based interface. The Iu interface may use SS7 (Signalling System 7) for the transport of a control message.

Within an LTE/SAE environment the S1 interface may be used for the transport of control messages. The S1 interface may comprise an SCTP over IP (SCTP/IP, Stream Control Transmission Protocol) layer. Providing within a Femto CPE two different types of UE interfaces may be a cost-intensive approach and may require complicate configuration work. Software, which supports the SS7 protocol, may be an intensive cost factor, e.g. licenses.

Thus, it may be seen as a gist of the present invention to control separate circuit switched traffic and packet switched traffic on an air interface, the air interface complying to the 3G standard via a network interface defined in the LTE/SAE standard. In other words, an idea of the present invention may be to prevent a connection oriented service for control information for each UE, which connection oriented service may require a SS7 based protocol, and handle a separated circuit switched traffic and packet switched traffic with one single administration connection or one single control connection. Thus, it may be an idea of the invention to use a single connection for transporting the control traffic for circuit switched traffic, e.g. voice traffic, and for packet switched traffic, e.g. data traffic.

Thus, a single connection for administrating at least one user equipment (UE) may be deployed. In other words, a single connection may be established between a gateway and a Femto CPE or between a core network and a Femto CPE. An identifier may be used, in order to differentiate between different UEs, which UEs may be connected to the corresponding Femto CPE. An identifier may be used, in order to differentiate between circuit switched traffic and packet switched traffic for a corresponding UE.

Thus, an individual first connection to each individual UE may be avoided. Furthermore, a second connection for circuit switched traffic and a third connection for packet switched traffic may also be avoided. Thus, for each UE at least two connections may be avoided. For providing circuit switched traffic and packet switched to a single UE, at least three connections may be avoided.

Administrative information belonging to the circuit switched traffic and administrative information belonging to the packet switched traffic may be differentiated by using an identifier instead of a connection. Such an identifier may be an identifier used by the S1 interface protocol to differentiate between multiple UEs communicating with the same MME (Mobility Management Entity). Different MMEs may be differentiated by different SCTP connections.

Thus, the functionality of the interface between an eNodeB (evolved NodeB) and a MME, i.e. the S1 interface, as specified in 3GPP TS36.413 for the 4G or LTE/SAE standard, may be enhanced to transport messages of the 3G standard. For example, the S1 interface may be adapted to transport RANAP signalling (Radio Access Network Application Part) of the UTRAN Iu interface. The RANAP signalling may base on connections, provided by the SCCP network layer (Signalling Connection Control Part). The connection oriented services provided by the SCCP may be replaced by identifier based associations provided by the SLAP (S1 Application Protocol). A non-UE (non-User Equipment) associated service and an UE-associated service may replace a connection oriented functionality of the SCCP and a connectionless functionality of the SCCP.

In the following further aspects of the base station will be described. These aspects apply also for the method of operating a base station, the program element for operating a base station, the gateway, the method for operating a gateway, the program element for operating a gateway, the network apparatus, the method for operating a network apparatus and a program element for operating a network apparatus.

According to another aspect of the present invention, the base station further comprises a connection-packet oriented device. The connection-packet oriented device comprises a further interface, wherein the further interface is a radio interface. The further interface may be a third interface. The administration device is further adapted to administrate a connection service and/or a packet service via the further interface.

A connection-packet oriented device may be a device, which is adapted to handle connection oriented traffic and/or packet oriented traffic. I.e. a connection-packet oriented device may handle packet switched traffic and/or connection switched traffic at the same time.

A connection-packet device inside a base station may allow handling of LTE traffic within the base station at the same time as the base station handles 3G traffic. The LTE traffic may be a mixture of time critical traffic and non-time critical traffic. Time critical traffic may be comparable with circuit switched traffic. Non-time critical traffic may be comparable with packet traffic.

According to another aspect of the present invention, the base station further comprises at least one home installation facility, wherein the home installation facility is selected from the group of home installation facilities, the group consisting of a DSL interface, a 110 V AC (Alternating Current) power supply, a 230 V AC power supply, a 12 V DC (Direct Current) power supply, a 9 V DC power supply, a storage capacitor, a battery and a solar cell.

Providing home installation facilities on the base station may allow easily installing a base station in a residential proprietary. Thus, a person, who is not familiar with conducting complicated configuration work and with installation work, may be able to install a Femto CPE or base station in the customer premise. Furthermore, the base station may be a self-configuration and self-installation plug and play device, which may easily integrate into an existing network.

According to another aspect of the present invention, the first channel and the second channel are channels on a Uu interface, and the network interface is an S1 interface. An S1 interface may be any interface transporting the S1-AP protocol. E.g. S1-AP over SCTP over IP may be considered as an S1 interface.

The Uu interface may differentiate between connection switched traffic and packet switched traffic. The Uu interface may have sub-interfaces or sub-channels. The S1 interface may allow differentiating between connection switched traffic and packet switched traffic by using an identifier, without setting up a connection. In other words, the S1 interface may allow to differentiate connection switched traffic and packet switched traffic on the S1 interface based on an identifier, which traffic was received via the Uu interface. Even if the connection switched traffic and the packet switched traffic are separated on the Uu interface this may not exclude that the connection switched traffic and the packet switched traffic is provided via a single physical interface on the base station like an antenna. Thus, the different channels may be established via a common interface, in particular a common Uu interface.

In the following further aspects of the gateway are described. These aspects also apply for the base station, the method for operating a base station, the program element for operating a base station, the method for operating a gateway, the program element for operating a gateway, the network apparatus, the method for operating a network apparatus and the program element for operating the network apparatus.

According to another aspect of the present invention, the gateway has a base station interface, which is based on the S1 standard. Furthermore, the connection oriented gateway interface and the packet oriented gateway interface of the gateway is an Iu interface.

In particular according to another aspect of the invention, the gateway may comprise an Iu-CS, an Iu-PS, an S1 interface to connect to the base station and an S1 interface to connect to an LTE core network. In other words, an Iu-CS interface may allow connecting to a MSC, an Iu-PS interface may allow connecting to an SGSN and an S1-AP* interface may allow connecting to a base station. An S1-AP* interface may be an enhanced S1-AP interface.

Thus, the gateway may comprise an Iu interface and at least two S1 interfaces. One of the at least two S1 interfaces may support the S1AP protocol, the other one of the at least two S1 interfaces may support the enhanced S1AP protocol or the S1AP* protocol. One of the at least two S1 interfaces may be connectable to a MME, the other one of the at least two S1 interfaces may be connectable to a base station. In other words, the gateway may comprise an interface to an SGSN using RANAP, an interface to a MSC-S using RANAP and an interface to a MME* using S1-AP.

The Iu interface may be a network interface defined in the 3G standard which may allow controlling of separated packet switched control traffic and connection switched control traffic. A gateway which on one side receives connection switched control traffic and packet switched control traffic and combines this traffic on a single S1 interface may allow reducing in a base station effort for a differentiation between packet switched traffic and connection switched traffic. In order to reduce the effort or in order to reduce the performance for differentiating between different types of traffic or between different types of administration traffic, an identifier may be used in the gateway. Thus, the combination of an S1 interface and an Iu interface on a gateway may allow to replace a SS7 interface and may replace an SS7 interface by a more simple interface.

In the following further aspects concerning the network apparatus will be described. These aspects also apply for the base station, the method for operating a base station, a program element for operating a base station, the gateway, the method for operating a gateway, the program element for operating a gateway, the method for operating the network apparatus and the program element for operating a network apparatus.

According to a further aspect of the present invention, the network apparatus further comprises a Serving GPRS (General Packet Radio Service) Support Node (SGSN).

A network apparatus according to the 4G standard or according to the LTE/SAE architecture, which network apparatus comprises a SGSN, may allow the network apparatus to operate user equipment based on the 3G standard in an LTE architecture.

According to another aspect of the present invention, the network apparatus is a Mobility Management Entity (MME) according to the LTE/SAE architecture definition.

Thus, the network apparatus may be an MME, comprising an SGSN node and an all-IP network still be adapted to handle packet switched traffic and connection switched traffic separately in the core network, which traffic may be separated on a radio interface.

It has also to be noted that aspects of the invention have been described with reference to different subject-matters. In particular, some aspects have been described with reference to apparatus type claims whereas other aspects have been described with reference to method type claims. However, a person skilled in the art will gather from the above and the following description that, unless other notified, in addition to any combination features belonging to one type of subject-matter also any combination between features relating to different subject-matters, in particular between features of the apparatus claims and the features of the method claims is considered to be disclosed with this application.

These and other aspects of the present invention will become apparent from and elucidated with reference to the embodiments described hereinafter.

Exemplary embodiments of the present invention will be described in the following with reference to the following drawings.

### Brief description of the drawings

Fig. 1 shows a Femto CPE and a Femto gateway for a better understanding of the present invention.
Fig. 2 shows a Femto CPE and a Femto gateway, wherein the Femto gateway is connected to a packet switched network and a connection switched network, for a better understanding of the present invention.
Fig. 3 shows a Femto CPE connected to a LTE network, supporting LTE services, for a better understanding of the present invention.
Fig. 4 shows a Femto CPE connected to a LTE network, supporting 3G PS services according to an exemplary embodiment of the present invention.
Fig. 5 shows the internal structure of a base station according to an exemplary embodiment of the present invention.
Fig. 6 shows the internal structure of a gateway according to an exemplary embodiment of the present invention.
Fig. 7 shows the internal structure of a network apparatus according to an exemplary embodiment of the present invention.
Fig. 8 shows a protocol stack according to an exemplary embodiment of the present invention.
Fig. 9 shows a flow chart for a method for operating a base station according to an exemplary embodiment of the present invention.
Fig. 10 shows a flow chart for a method for operating a gateway according to an exemplary embodiment of the present invention.
Fig. 11 shows a flow chart for a method for operating a network apparatus according to an exemplary embodiment of the present invention.

### Detailed description

The illustration in the drawings is schematic. In different drawings, similar or identical elements are provided with the same reference numerals.

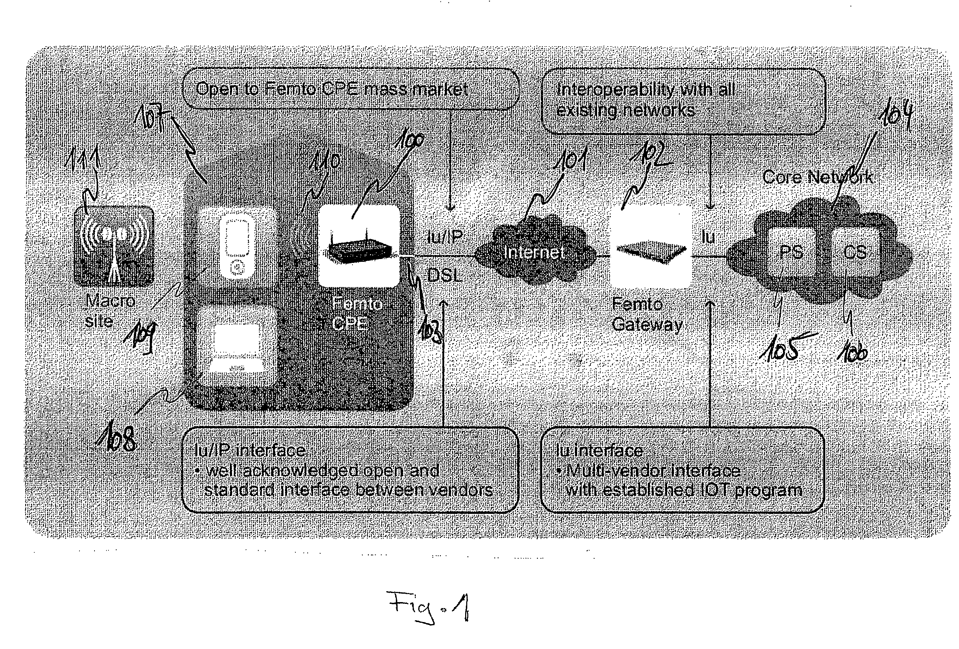

Generally Fig. 1 to 4 show a control plane, i.e. administrative equipment for controlling connections on a user plane.

Fig. 1 shows a Femto CPE and Femto gateway for a better understanding of the present invention. The Femto CPE 100 is connected via the Internet 101 to a Femto gateway 102. For connecting the Femto CPE to the Internet, the Femto CPE has a DSL interface 103. Via the DSL interface an Iu/IP (Iu over IP) protocol is transported from the Femto CPE 100 to the Femto gateway 102.

The Iu/IP protocol may be used in a Femto CPE, which may be provided for the mass market. The Iu/IP interface is an open and standard interface between vendors.

The Femto gateway 100 connects to a core network 104 via an Iu interface. Within the core network the packet switched traffic 105 and the connection switched traffic 106 are handled separately. The separation and concentration of the Packet Switched (PS) traffic and the Connection Switched (CS) traffic or Circuit Switched (CS) traffic is done within the Femto gateway 102. Thus, the core network 104 in the direction to Femto gateway sees an RNC (Radio Network Controller) according to the UMTS/UTRAN standard and the Femto CPE sees a core network according to the UMTS standard.

The Femto CPE supplies an area inside building 107. In other words, UE like the laptop 108 and the mobile phone 109 which are in close up neighbourship to the Femto CPE can be reached by the Femto CPE 100. The laptop 108 generates packet switched traffic and the mobile phone 109 generates for example voice traffic, i.e. connection switched traffic. Both, laptop 108 and mobile phone 109 communicate via the remote interface 110, the radio interface 110 or the air interface 110 of the Femto CPE. Inside the building 107 the NodeB 111 from an outside macro site may not be seen, because the signal of the macro site does not reach the User Equipment UE 109, 108.

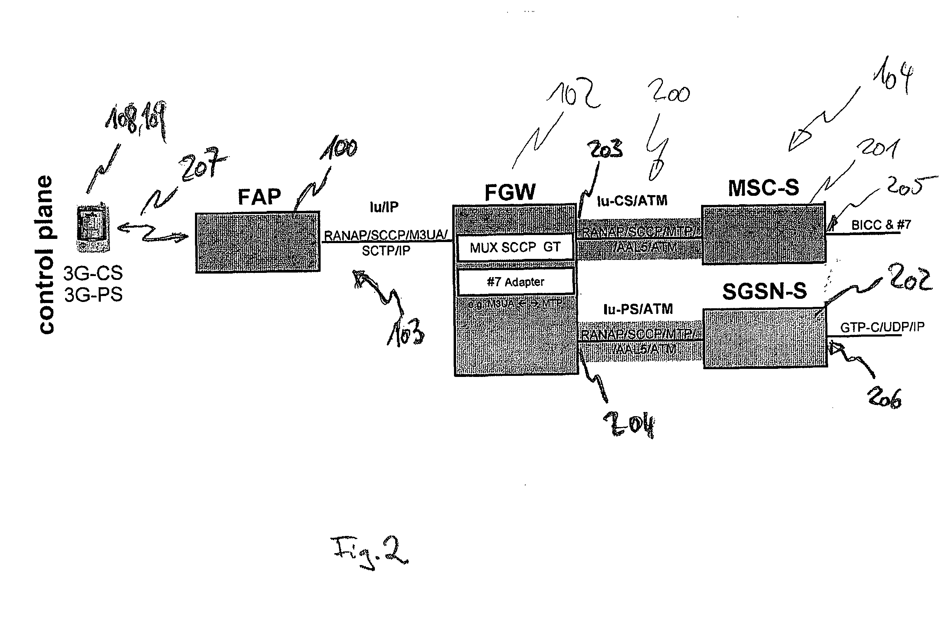

The protocols, which are used between the Femto CPE 100, the user equipment 108, 109, the gateway 102 and the core network 104 are shown in more detail in Fig. 2. The Femto CPE 100, Femto Access Point 100 or FAP 100 is connected via the DSL interface 103 to the Femto gateway 102. Via the DSL interface 103 the RANAP protocol is transported based on the SCCP and M3UA (User Adaptation Layer for SS7) protocol and the whole protocol stack is transported via SCTP (Stream Control Transmission Protocol) over IP.

The Femto CPE 100 provides in combination with Femto gateway 102 the functionality of a Radio Network Controller (RNC). The RNC 100, 102, i.e. the FAP 100 and FGW 102, is connected via the Iu interface 200 to the core network 104.

The core network 104 comprises the MSC-S 201 (Mobile Switching Centre-Server). The core network 104 further comprises the SGSN 202 (Serving GPRS Support Node). The Femto CPE 100 is connected to the Femto gateway 102, which enables secure access via a VPN (Virtual Private Network) tunnel.

The Femto gateway 102 acts as a concentrator for the circuit switched traffic and the packet switched traffic in the direction to the Femto CPE 100. The Femto gateway 102 concentrates the circuit switched traffic (CS) received via Iu-CS interface 203 from the MSC-S and the packet switched (PS) traffic received via the Iu-PS interface 204 from the SGSN 202. The transport layer for the Iu-CS interface 203 and the Iu-PS 204 interface is ATM (Asynchronous Transfer Mode). Thus, the protocol stack transported via Iu-CS interface 203 is RANAP (Radio Access Network Application Part) over SCCP over MTP (Message Transfer Part) over AAL5 (ATM Adaptation Layer 5) over ATM or RANAP/SCCP/MTP/.../AAL5/ATM.

The protocol layer transported via the Iu-PS interface 204 is also RANAP/SCCP/MTP/.../AAL5/ATM.

The MSC-S 201 is connected via the circuit switched core interface 205 to a switched network. The protocols transported via the switched core interface 205 is BICC (Bearer Independent Call Control) and SS7. The SGSN is connected via the packet switched interface 206 to a packet switched core network. The supported protocol via interface 206 is GTP-C (GPRS Tunneling Protocol-Control) via UDP (User Datagram Protocol) via IP.

The Femto gateway 102 is connected like a RNC 100, 102 of 3G network to the circuit switched domain 201 and the packet switched domain 202. Furthermore, the Femto gateway 102 is connected via interface 205 to a SS7 signalling network.

The Femto CPE 100 has to provide the control interface and protocol stack of a RNC. The control interface of a RNC is the Radio Access Network Application Part (RANAP). The RANAP however, uses the functionality of the signalling system no. 7 (SS7). Thus, RANAP signalling messages are transported by SS7.

The whole protocol stack which is used to transport the RANAP signalling message is SCCP, M3UA on top of SCTP/IP.

Additionally, the Femto CPE 100 has to support SS7 network management functions. The Femto gateway 102 converts different versions of SS7 one to another. For example, the Femto gateway converts SS7 via IP in SS7 via ATM.

Via interface 103 the Femto CPE 102 and the Femto CPE 100 are connected and use SS7 via IP for message transfer. The Femto gateway 102 is connected to the MSC-S 201 via the circuit switched interface 203 and uses a SS7 protocol over ATM.

The SGSN 202 is connected to the Femto gateway 102 via packet oriented interface Iu-PS 204 using SS7 via ATM. Within the Femto gateway 103 for example M3UA is converted into MTP. The gateway determines the connection to addresses of a Femto CPE by analysing the Global title contained in the SCCP messages. Thus, the Femto gateway 102 is an SS7 adaptor or SS7 converter.

Via radio access bearers (RAB) 207 the PS UE 108 and the CS UE 109 are connected to the FAP 100. A plurality of RAB is possible per PS.

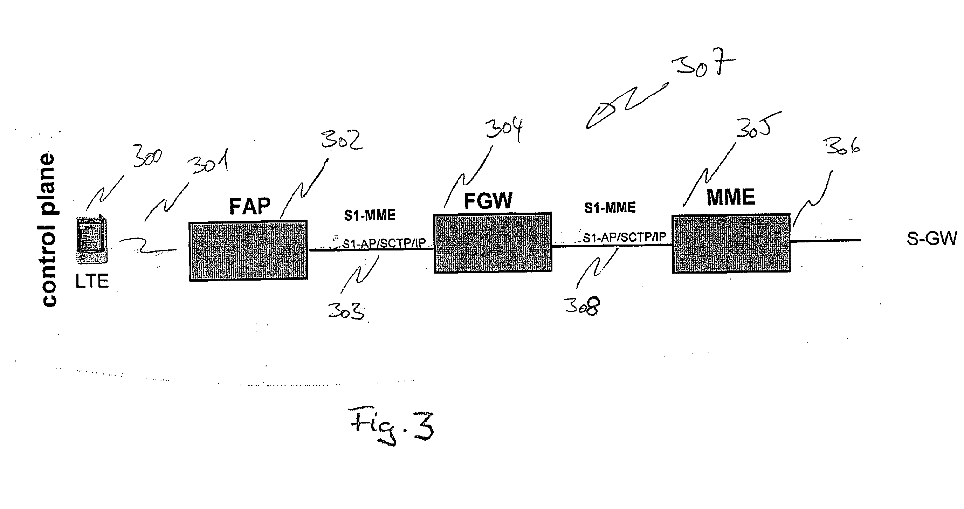

Fig. 3 shows a Femto CPE connected to an LTE network for a better understanding of the present invention. The Femto CPE is part of an enhanced Femto architecture for LTE. The LTE user equipment 300 or LTE UE 300 offers real time applications and data applications on one device. Thus, voice services and data applications are not separated within the device in the LTE device 300.

Via the radio bearer 301 the LTE UE 300 is connected to the LTE FAP 302. The LTE FAP 302 is connected via the first S1-MME interface 303 connected to the LTE FGW 304. The protocol layers transported via first S1-MME interface 303 is S1-AP via SCTP via IP or S1-AP/SCTP/IP.

The LTE FGW 304 is connected via the second S1-MME interface 308 to the MME 305. The MME 305 is connected via a further S1 interface 306 to the signalling gateway S-GW.

The Femto CPE 302 or FAP 302 offers LTE access for a UE 300. Thus, the FAP 302 provides access to an SAE/LTE network, in particular to a MME 305. Thus, the FAP 302 provides the functionality of an enhanced NodeB (eNodeB).

Control messages for the user traffic from user equipment 300 are processed according to the standard for the S1 interface and the S1 AP protocol 303, 304. Thus, the access network comprising FAP 302 and FGW 304 may be an all-IP interface, which transports signalling information via SCTP over IP.

The gateway 304 may not have to conduct a protocol conversation and the gateway 304 can be used as a concentrator to connect a plurality of FAP 302 to one or a plurality of MME 305.

For cost reasons a network operator may install a Femto CPE and a Femto gateway, which are ready for a SAE/LTE network, however which additionally supports 3G-CS traffic 109 and 3G-PS traffic 108. Thus an RAB for the 3G-CS traffic 109 and an RAB for the 3G-PS traffic 108 may have to be controlled by the FAP 302 in addition to an LTE bearer 301. Thus, costs may be reduced for a later update of the access network, configuration work for an end user may be reduced (zero configuration) and the installation of a FAP may be simplified. In addition a compact hardware may be provided with low power consumption.

However, in order to support the 3G Uu interface 207 or 3G RAB 207 for separated CS and PS traffic the employment of a RANAP protocol may be required. Employing a RANAP however may also require the employment of SS7 signalling within the Femto CPE and/or the Femto gateway. The one Femto gateway, which supports 3G and LTE may increase the costs of employed hardware.

Using an LTE protocol, without SS7 may prevent costs for the SS7 protocol. Waiving the SS7 may also reduce configuration effort including network management functionalities and administration. I.e. employing an all-IP solution may reduce the configuration effort. The Femto gateway according to the LTE standard may also have not to provide multiplexing capabilities of the SCCP (using global title translation function) and may prevent a conversion between different variants of SS7 protocol stack.

A FAP, Femto CPE and Femto gateway, which base on LTE or an all-IP network may use IP only as a transport protocol. The reduced costs and the reduced complexity may help to address the residential market with the Femto CPE.

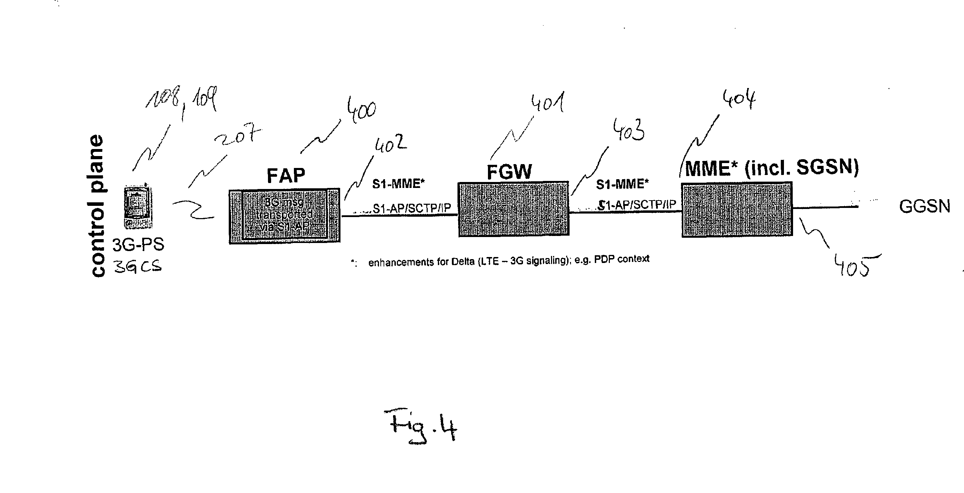

Fig. 4 shows a base station for supporting 3G traffic in an LTE environment according to an exemplary embodiment of the present invention. The base station 400 supports separated traffic from a 3G-PS application 108 or a 3G-CS application. The 3G-PS traffic and the 3G-CS traffic is handled as separate traffic streams, which are received via the Uu interface 207. The Uu interface 207 uses a RAB for the 3G-PS traffic and a RAB for the 3G-CS traffic. The functionality provided by the SCCP may be replaced by functionality of the S1AP protocol.

In the direction to the core network, i.e. in the direction to the MME* 404, the base station 400 supports the S1 interface 402. The 3G-PS control traffic 108 is received by a second interface or a second channel of base station 400 and the 3G-CS control traffic is received by a first interface or a first channel of the base station 400.

The base station 400 is connected to gateway 401 via a first enhanced S1-MME interface 402 or the first S1-MME* interface. The enhanced S1-MME interface 402 supports 3G signalling over the LTE interface S1, for example for setting up an RAB 207.

The gateway 401 is connected via the second enhanced S1 MME interface 403 to the enhanced network apparatus 404 or the enhanced MME 404. The enhanced MME comprises the functionality of a SGSN. The SGSN may support the mobility management for packet switched services for user equipment. Thus, a connection via the core network interface 405 to the GGSN is possible. Via the core network interface 405 the protocol stack GTP-C/UDP/IP is used.

The first network interface 402 and the second network interface 403 use a protocol stack S1-AP/SCTP/IP. Thus, substantially no connection oriented protocol is used by the first network interface 402 and the second network interface 403. The identification of different destinations (UEs) may be made by the use of identifier instead of pre-established connections. Connections for exchanging messages described in this application generally may be defined as bidirectional connections.

Fig. 4 may also show the enhanced transport of RANAP between Femto CPE 400 and enhanced MME (MME*) 404. A standard MME as specified by the 3GPP SAE may provide SGSN functionality.

In order to differentiate in particular in the base station 400 between packet switched traffic and circuit switched traffic, the standard MME/SGSN may be enhanced to support RANAP via S1AP. Thus, a conversion of an S1AP command, procedure or message into a RANAP procedure within a Femto gateway may be avoided.

The gateway 401 of Fig. 4 may be used as a multiplexer, which may allow connecting a plurality of Femto gateways 400.

The network structure shown in Fig. 4 may be employed in an existing 3G network, as well as in a LTE network. A migration scenario where LTE access may be introduced in limited areas and LTE access may coexist with 3G access provided by an installed base may be covered using the base station 400 and the gateway according to the present invention.

Thus, the enhanced S1 interface 402, 403, and in particular the enhanced S1-AP protocol may transparently transport the RANAP message, for example in a container. The applicable RANAP signalling may be transported via the S1-AP protocol.

A RANAP message may be transported via a container in the S1-AP signalling. A new type of S1-AP messages may be defined in order to transport the appropriate RANAP messages.

RANAP messages may be transported via S1-AP. For each RANAP message an appropriate new message may be added to the S1-AP specification. Thus, a new message having a new message type may be defined and the content of the new message corresponds to messages as specified in RANAP.

Furthermore, the S1-AP message for the initial UE message is adapted. This is a message for assigning an identity or an ID in a Femto CPE and in a Femto gateway or in a MME*. With such an ID, different destinations (UEs) for a message may be differentiated. Using of an ID may prevent to set up a connection which would increase the administration effort.

The S1-AP messages may be enhanced for the transport of RANAP procedures.

The S1-AP message for the transport of non-UE related messages is enhanced. A non-UE related message may be a message which is exchanged between CPE 400 and MME* 404 without involving the UE, for example related to S1 interface management functions to instruct the CPE 400 to reset the interface 103.

UE-related S1-AP procedures for bearer management may also be extended to include RAB assignment, modification and release message. The message from S1-AP protocol which may be reused for RAB assignment, modify and release to support the 3G Uu interface may be the SAE BEARER SETUP REQUEST/RESPONSE, SAE BEARER MODIFY REQUEST/RESPONSE and SAE BEARER RELEASE command. The SAE BEARER SETUP REQUEST/RESPONSE may be extended to include information from the RAB ASSIGNMENT REQUEST/RESPONSE as defined in 3GPP TS 25.413. The SAE BEARER MODIFY REQUEST/RESPONSE may be extended to include information from the RAB MODIFY REQUEST/RESPONSE.

Thus, 3G specific procedures according to the RANAP protocol may be transported via messages which are introduced in the S1-AP protocol standard.

A UE-related message may be a message that has to be transported transparently between Femto CPE 400, a base station 400 and MME or MSC-C. Thus, the base station 400 or the gateway does not interpret the content of the message.

A UE-related message may be a message which is interpreted by the base station 400 (e.g. messages for bearer management, initial Context Transfer, mobility management, paging, context release). Thus, on the receipt of such a UE-related message a base station 400 realize that the corresponding base station 400 has to interpret the content of the message.

The UE-related message and the non-UE-related message may provide a container for specific RANAP messages. Thus, an enhancement for S1-AP standard is provided. The enhancement for the S1-AP standard may enable the transport of RANAP messages or procedures via IP and thus, may avoid the implementation of SS7 protocol stacks in a Femto CPE or a Femto gateway.

Thus, transporting the RANAP information according to the S1-AP protocol directly via IP may avoid the implementation of a SCCP layer between the 3G message, i.e. the RANAP message, and the IP layer. Such a direct transport of a RANAP information via IP may allow the support of a LTE terminal and a 3G terminal by the same hardware and software. Thus, an LTE terminal and a 3G terminal may be supported by the inventive Femto CPE and the inventive Femto gateway. Avoiding the SCCP layer for transporting the RANAP message may reduce the cost for a Femto CPE and may prevent a user from a complex configuration for the SS7 layer.

The enhanced S1-AP messages may be detected or made visible by tracing of the message exchange between a Femto CPE and the Femto gateway.

The Femto CPE 400 may avoid a mixed 3G/4G (LTE/SAE) scenario, wherein a Femto gateway or a Femto CPE has to support RANAP/SCCP and S1-AP. The support of two different interfaces and protocol stacks, as the support of the S1-AP and SCCP protocol may be prevented.

The 4G (4^{th} generation) or LTE/SAE protocol according to the S1-AP standard may be enhanced to emulate a selected SCCP functionality and thus, the enhanced 4G S1-AP protocol may be able to transport the RANAP signalling. Thus, the S1-AP protocol may be enhanced to support RAB assignment, modify, release and some S1-AP messages may be changed to be able to transport the RANAP messages.

A 3G Femto CPE and a 3G/4G Femto gateway and a 3G/4G MME/SGSN are provided, which CPE, gateway, and MME are adapted to support RANAP over the enhanced S1-AP protocol. Thus the Femto CPE and Femto GW are connected via RANAP over enhanced S1-AP and substantially no SS7 signalling has to be provided in the Femto CPE. The Femto gateway may not have to support SCCP connections to a Femto CPE and the Femto gateway may only have to support enhanced S1-AP protocol. If MME/SGSN also support RANAP over enhanced S1-AP, substantially no conversion at the Femto gateway may be required.

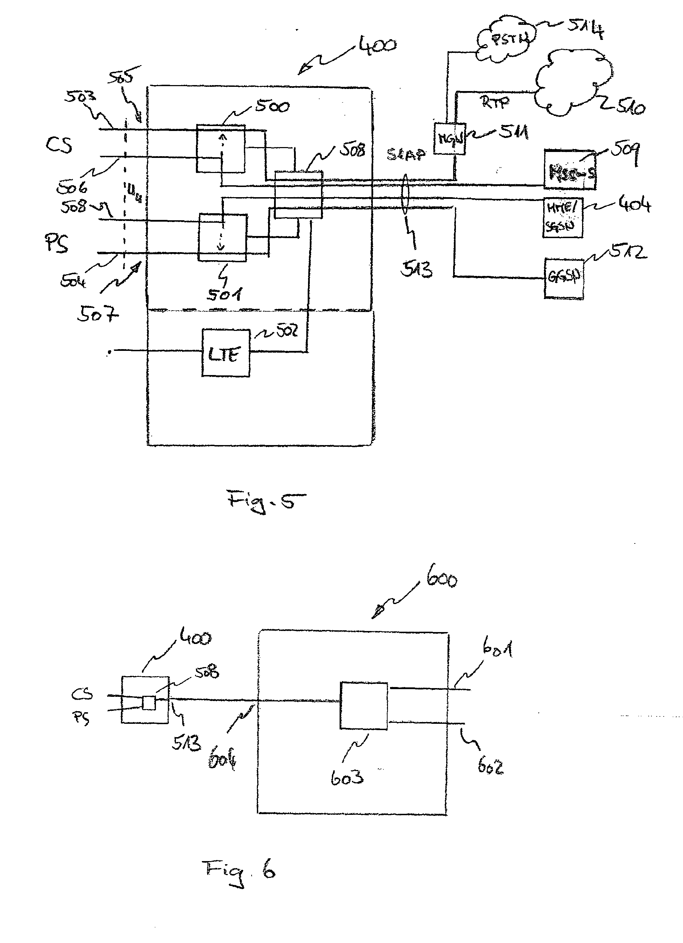

Fig. 5 shows the internal structure of a base station according to an exemplary embodiment of the present invention. The base station 400 comprises the connection oriented device 500 and the packet oriented device 501.

Furthermore, the base station 400 comprises the connection-packet oriented device 502 or the LTE device 502. The connection-packet oriented device 502 is adapted to support LTE equipment.

The base station 400 separates the connection switched traffic 503 and the packet switched traffic 504 according to the 3G standard by using a different interfaces for 3G UE 505, 507 and for LTE UE 502. For the circuit switched traffic 503 the first RAB is provided by the connection oriented device 500. For the packet switched traffic 504 the second RAB is provided by the packet oriented device 501.

Via the first Uu interface 505 also a control layer 506 for administrating the CS connection 503 is provided. By the second Uu interface 507 the packet switched traffic, which is user traffic 504 and the packet switched control traffic 508 is provided. The first Uu interface 505 and the second Uu interface 507 may be different channels on a common radio interface.

The circuit switched control traffic 506 is connected via the connection oriented device 500 and the administrating device 508 to MSC-S 509. The circuit switched user traffic 503 is connected via the connection oriented device 500 and the administrating device 508 to the Media Gateway 511, which is connected to the core network 510 of the MNO (Mobile Network Operator) and/or to the PSTN 514. The user traffic 503 uses the RTP (Real Time Protocol) for transporting the user data. The Media Gateway 511 routes user traffic 503 to the core network 510 or to the PSTN network 514. The core network may be an IP network 513.

The MSC-S 509 communicates with the connection oriented device 500 via RANAP. I.e., the MSC-S 509 provides RANAP messages for a circuit switched service.

The MME 404 or the MME* 404 communicates with the packet oriented device 501 via S1-AP. I.e., the MME 404 provides S1-AP messages for a packet switched service.

The SGSN 404 communicates with the packet oriented device 501 via RANAP. I.e., the SGSN 404 provides RANAP messages for a packet switched service. In particular, the SGSN 404, 202 sends RANAP to the FGW 102, 401. The FGW 102, 401 converts Iu-PS to S1-AP. The MME* may directly provide S1AP.

The administrating device 508 has a physical connection to the connection oriented device 500. The administrating device 508 also has a physical connection to the packet oriented device 501.

Via the second Uu interface 507 the packet switched control information 508 is transported via the packet oriented device 501 and the administrating device 508 to the MME/SGSN 404. Thus, the management or administration for the packet switched connection 504 is handled by MME* 404.

The payload of the packet switched traffic travels via the packet oriented device 501 and the administrating device 508 to the GGSN 512. GGSN 512 may connect the packet switched payload 504 to the Internet, which is not shown in Fig. 5.

The circuit switched administration traffic 506, the circuit switched payload traffic 503, the packet switched administration traffic 508 and the packet switched payload traffic 504 use the IP interface 513, which is connected to the administrating device 508. Via the IP interface 513 the S1-AP protocol is employed for sending messages. The S1-AP protocol may be based on an identifier and thus may allow to avoid the employment of SS7 signalling traffic.

Fig. 6 shows the internal structure of a gateway according to an exemplary embodiment of the present invention. The gateway 600 is connected via the Iu-CS interface 601 or via the connection oriented gateway interface 601 to a MSC of a 3G network, which MSC is not shown in Fig. 6.

The second Iu interface, the Iu-PS interface 602 or the packet oriented gateway interface 602 is connected to a SGSN, which is not shown in Fig. 6.

The MSC-S and the SGSN and the connection of a gateway to a MSC-S and a SGSN is shown in Fig. 2. The gateway 600 comprises the concentrating device 603 and the base station interface 604. The base station-interface 604 is connected to the concentrating device 603 and to the base station 400.

The base station interface 604 bases on the IP protocol. The base station interface 604 furthermore is an enhanced S1-MME interface comprising S1-AP/SCTP/IP. The concentrating device 603 converts the Iu-CS interface 601 and the Iu-PS interface 602 to comply with the base station interface 604. I.e. the protocol of the Iu-CS and the Iu-PS interface is converted to the protocol of the base station interface 604, which base station interface protocol can be interpreted by a Femto CPE 400. In particular administrative information which is received via the Iu-CS interface 601 and via the Iu-PS interface 602, for example a RANAP protocol messages are packed from the concentrating device 603 into a container for the base station 400 or an UE connected to the base station 400.

The RANAP protocol is transported between the Femto CPE 400 and the Femto gateway 600 via the enhanced S1-AP protocol. The Femto gateway 600 provides a conversion to transport the RANAP protocol received from the CS or PS core via SCCP/MTP into S1-AP/SCTP/IP in the direction to the base station. The gateway also converts a RANAP protocol received via S1-AP into the RANAP protocol and sends the converted RANAP message in the direction to the CS core 601 or PS core 602.

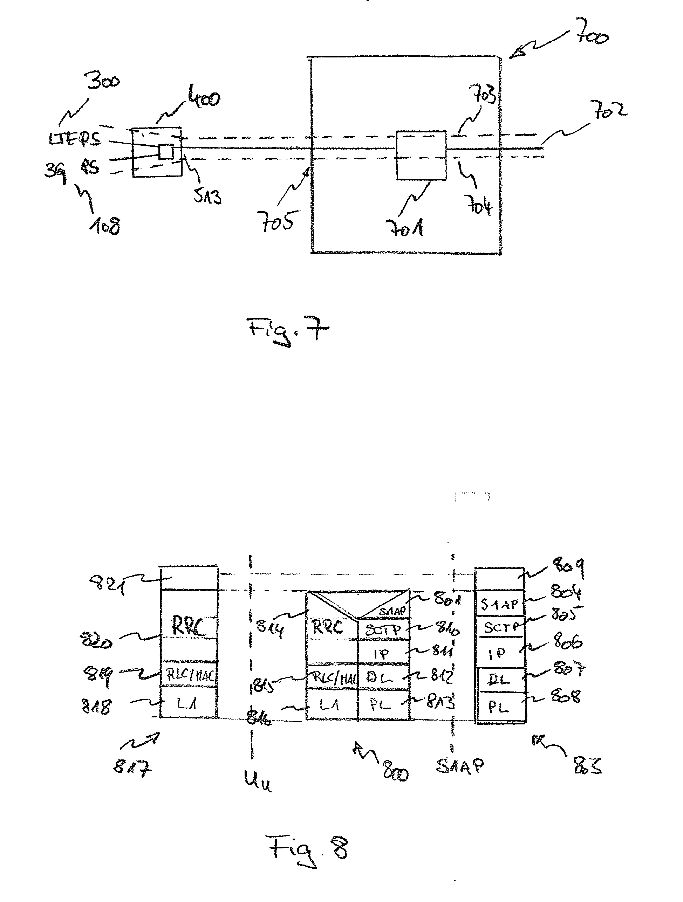

Fig. 7 shows the internal structure of a network apparatus according to an exemplary embodiment of the present invention. The network apparatus 700 comprises the adapting device 701. The adapting device receives via the core interface 702 administrative information or control information for a packet switched service 703 for an LTE UE 300 and control information for a packet switched service 704 for a 3G PS application 108, in particular for a 3G UE.

The adapting device 701 may comprise a SGSN.

The network apparatus 700 forwards LTE S1-AP messages according to the received packet switched LTE control information 703 to the base station 400 or the LTE UE 300. The LTE message may be forwarded to the base station without a substantial adaptation.

Furthermore, the network apparatus 700 generates a RANAP message for the base station 400 or for the 3G PS UE 108. The RANAP message is generated in accordance with the packet switched control information 704 received from the core network. The network apparatus 700 adapts the RANAP message destined for the 3G PS UE 108 such, that the RANAP message can be transported by the S1-AP protocol. The core network is not shown in Fig. 7.

The administrative information 703 for the LTE packet switched service is communicated via the base station interface 705 based on S1-AP.

The administrative information 704 for the 3G packet switched service is communicated to the base station 400 via the base station interface 705 based on the enhanced S1-AP protocol or S1-AP* protocol. The base station 400 separates the 3G PS administrative information 703 and the LTE administrative information 704. The base station 400 interprets the RANAP message, which message corresponds to the 3G PS UE. The separation of the administrative information may be made on the basis of an identifier. In other words, the base station may receive the information about the destination of a 3G PS information in the form of an identifier.

The RANAP message may be used to administrate corresponding RABs for a 3G PS UE.

Fig. 8 shows a protocol stack according to an exemplary embodiment of the present invention. The figure shows a protocol stack for a base station 800, which base station converts or extracts from a container in a S1-AP message 801 a RANAP message into a Radio Resource Control (RRC) message 802 according to an Uu interface. Such a protocol stack 800 may be deployed for circuit switched control traffic and for packet switched control traffic.

The base station protocol stack 800 receives via the enhanced S1 interface messages from the protocol stack 803 of an MME. The MME protocol stack 803 comprises an S1-AP protocol layer, a SCTP 804, an SCTP protocol layer 805, an IP protocol layer 806, a data link layer 807 and a physical layer 808. Thus, a S1-AP/SCTP/IP protocol stack is realized.

S1-AP may transport the NAS container 809 as a user data. In the base station protocol stack 800 a corresponding protocol stack comprising SCTP 810, IP 811, data link layer 812 and physical layer 813 exists. The protocol stack 800 in the base station may extract from a container in an S1-AP message or from an enhanced S1-AP message 801 corresponding information for a RAB to control the Uu interface in the direction to a user equipment.

Within the base station, the protocol stack for controlling the Uu interface comprises the radio resource control (RRC) 814, the Radio Link Control (RLC) and the Medium Access Control (MAC) 815, and the physical layer L1 816.

In the user equipment a corresponding protocol stack for controlling the Uu interface 817 exists. This protocol stack in the UE comprises the physical layer 818, the RLC/MAC 819 and the RRC 820. The transport network layer of the user equipment comprises RRC 820, RLC/MAC 819 and L1 818. The NAS 821 is a payload which is transferred between user equipment and MME/SGSN or between user equipment and MSC-S without access inside the access network. Thus, the NAS message 821, 809 is not interpreted by the base station.

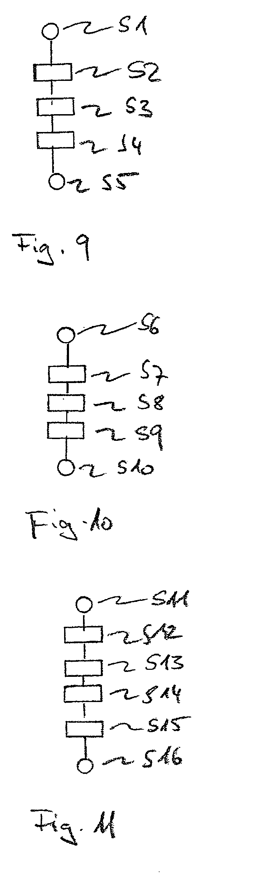

Fig. 9 shows a method for operating a base station according to an exemplary embodiment of the present invention. The method starts in step S1 with the initialization process when a user equipment attaches to the base station.

In step S2 the base station communicates with a network. The communication of the base station and the network is based on an identifier. In step S3 a connecting service which is conducted via the first interface of a base station is administrated in accordance with the communication between the base station and the network. In particular, the administration is conducted based on control information between the base station and the network.

In step S4 the packet service via a second interface of the base station is administrated in accordance with a communication between the base station and the network. Thus, for example the network can control the behaviour of the base station. In step S5 the method is terminated.

Fig. 10 shows a method for operating a gateway according to an exemplary embodiment of the present invention.

The method starts in step S6 with an initialization of the method. In step S7 administrative information associated with a circuit switched service on a connection oriented gateway interface of the gateway is communicated to a base station via a base station interface. The administrative information is associated with a circuit switched service or connection service.

The information which is communicated in the direction to the base station is in accordance with the circuit switched service on the connection oriented gateway interface of the gateway.

In step S8 administrative information associated with a packet service is communicated to the base station. The administrative information is associated with a packet service on a packet oriented gateway interface of the gateway.

In step S9 the gateway communicates with the base station via the base station interface. The communication with the base station is based on an identifier. In step S10 the method ends.

Fig. 11 shows a method for operating a network apparatus according to an exemplary embodiment of the present invention.

The method starts in step S11 and in step S12 administrative information for a connection switched service and/or administrative information for packet switched service is exchanged with a core network.

In step S13 the network apparatus extracts or separates administrative information belonging to a packet switched service associated with an LTE UE and administrative information belonging to a packet switched service associated with a 3G PS UE. The network apparatus may also extract administrative information belonging to a circuit switched service, which service is transported via the core network. In step S14 the administrative information associated with the messages for the LTE UE is communicated via a base station interface. The communicated administrative information relates to the LTE service.

In step S15 the network apparatus communicates with the base station via the base station interface of the network apparatus. This communication is based on an identifier in order to differentiate between different 3G UEs belonging to the packet service.
In other words, administrative information for the 3G PS UE packet service and/or administrative information for the LTE UE packet service is converted into an S1-AP protocol and an enhanced S1-AP protocol, respectively.

In step S16 the method is terminated.

Thus, the administration is conducted in accordance with the communication with the network.

The base station 400 and the gateway 600 and/or the network apparatus may form a telecommunication system.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

### Abbreviations

- ATM: Asynchronous Transfer Mode
- CPE: Customer Premises Equipment
- DSL: Digital Subscriber Line
- IP: Internet Protocol
- MME: Mobility Management Entity
- LTE: Long Term Evolution
- RANAP: Radio Access Network Application Part
- SAE: System Architecture Evolution
- SCCP: Signalling Connection Control Part
- SCTP: Stream Control Transmission Protocol
- SS7: Signalling System No. 7
- UTRAN: Universal Terrestrial Radio Access Network
- MME*: enhanced MME
- S1AP: S1 Application Protocol
- S1AP*: enhanced S1AP

## Claims

1. Base station (400), comprising:
a connection oriented device (500);
a packet oriented device (501);
an administrating device (508);
the administrating device (508) further comprising:
a network interface (513);
the connection oriented device (500) comprising:
a first channel (505);
the packet oriented device (501) comprising:
a second channel (507);
wherein the first channel (505) and the second channel (507) can be established via a radio interfaces;
wherein the administrating device (508) is adapted to communicate with a network via the network interface (513); wherein the communication with the network is based on an identifier;
wherein the administrating device (508) is adapted to administrate a connection service via the first channel (505) in accordance with the communication with the network;
wherein the administrating device (508) is adapted to administrate a packet service via the second channel (507) in accordance with the communication with the network;
wherein the connection service via the first channel (505)and the packet service via the second channel (507) are separate services.

2. Base station (400) of claim 1, further comprising:
a connection-packet oriented device (502);
wherein the connection-packet oriented device (502) comprises:
a further interface;
wherein the further interface is a radio interface;
wherein the administration device (508) is adapted to administrate a packet service via the further interface.

3. Base station (400) of claim 1 or 2, further comprising at least one home installation facility selected from the group of home installation facilities, the group consisting of a DSL interface, a 110 V AC power supply, a 230 V AC power supply, a 12 V DC power supply, a 9 V DC power supply, a storage capacitor, a battery and a solar cell.

4. Base station (400) of one of claims 1 to 3, wherein the first channel (505) and the second channel (507) are channels on a Uu interface; and
wherein the network interface (513) is a S1 interface.

5. Method for operating a base station (400), the method comprising:
communicating with a network based on an identifier;
administrating a connection service via a first channel of the base station in accordance with the communication with the network;
administrating a packet service via a second channel of the base station in accordance with the communication with the network;
wherein the connection service via the first channel and the packet service via the second channel are separated services.

6. Program element for operating a base station, the program element comprising program code, which program code, when being executed by a processor, is adapted to carry out the method of claim 5.

7. Gateway (600), comprising
a concentrating device (603);
the concentrating device (603) comprising:
a base station interface (604);
a connection oriented gateway interface (601);
a packet oriented gateway interface (602);
wherein the base station interface (604) is adapted to communicate with a base station (400);
wherein the communication with the base station (400) is based on an identifier;
wherein the concentrating device (603) is adapted to communicate administrative information for a connection service on the connection oriented gateway interface (601) via the base station interface (604) in accordance with the connection service; and
wherein the concentrating device (603) is adapted to communicate administrative information for a packet service on the packet oriented gateway interface (602) via the base station interface (604) in accordance with the packet service;
wherein the connection service on the connection oriented gateway interface (601) and the packet service on the packet oriented gateway interface (602) are separate services.

8. Gateway (600) of claim 7, wherein the base station interface (604) is a S1 interface;
wherein the connection oriented gateway interface (601) and the packet oriented gateway interface (602) is an Iu interface.

9. Method for operating a gateway (600), the method comprising:
communicating administrative information associated with a connection service on a connection oriented gateway interface via the base station interface in accordance with the connection service;
communicating administrative information associated with a packet service on a packet oriented gateway interface via the base station interface in accordance with the packet service;
communicating with a base station via the base station interface based on an identifier.

10. Program element for operating a gateway, the program element comprising program code, which program code, when being executed by a processor, is adapted to carry out the method of claim 9.

11. Network apparatus (700), comprising:
an adapting device (701);
the adapting device (701) comprising:
a base station interface (705);
a core interface (702);
wherein the adapting device (701) is adapted to communicate with a base station (400) via the base station interface (705);
wherein the communication with the base station (400) is based on an identifier;
wherein the adapting device (701) is adapted to exchange administrative information for a packet service with a core network via the core interface (702);
wherein the adapting device (701) is adapted to communicate the administrative information for the packet service via the base station interface (705) in accordance with the packet service.

12. Network apparatus (700) of claim 11, further comprising a Serving GPRS Support Node.

13. Network apparatus of claim 11 or 12, wherein the network apparatus is a Mobility Management Entity.

14. Method for operating a network apparatus (700), the method comprising:
exchanging administrative information for a packet service with a core network;
communicating the administrative information associated with the packet service via the base station interface in accordance with the packet service;
communicating with a base station via the base station interface based on an identifier.

15. Program element for operating a network apparatus, the program element comprising program code, which program code, when being executed by a processor, is adapted to carry out the method of claim 14.
